**Europäisches Patentamt**

**European Patent Office**

**Office européen des brevets**

(19)

(11) Veröffentlichungsnummer: **0 188 453**
**B1**

(12) **EUROPÄISCHE PATENTSCHRIFT**

(45) Veröffentlichungstag der Patentschrift:
**18.01.89**

(51) Int. Cl.⁴: **G 01 N 1/00**

(21) Anmeldenummer: **85902952.2**

(22) Anmeldetag: **01.07.85**

(86) Internationale Anmeldenummer:
**PCT/CH 85/00105**

(87) Internationale Veröffentlichungsnummer:
**WO 86/00703 (30.01.86 Gazette 86/3)**

(54) **VORRICHTUNG UND VERFAHREN ZUR QUANTITATIVEN UND/ODER QUALITATIVEN BESTIMMUNG VON FLÜSSIGKEITEN.**

(30) Priorität: 06.07.84 CH 3280/84
18.03.85 CH 1188/85

(43) Veröffentlichungstag der Anmeldung:
30.07.86 Patentblatt 86/31

(45) Bekanntmachung des Hinweises auf die Patenterteilung:
18.01.89 Patentblatt 89/3

(84) Benannte Vertragsstaaten:
AT BE CH DE FR GB IT LI LU NL SE

(56) Entgegenhaltungen:
EP-A- 0 001 137
DE-C- 371 496
FR-A- 1 599 716
FR-A- 2 250 109
FR-A- 2 425 382
GB-A- 2 025 065
US-A- 1 382 336
US-A- 2 561 809
US-A- 3 285 192
US-A- 3 652 170
US-A- 3 951 167
US-A- 3 953 136

(73) Patentinhaber: **METROHM AG, Oberdorfstrasse 68,
CH-9100 Herisau (CH)**

(72) Erfinder: **KAEMPF, Karl, Bergstrasse 8b,
CH-9100 Herisau (CH)**
Erfinder: **ZÄHNER, Paul, Sonnhaldenweg 26,
CH-9100 Herisau (CH)**
Erfinder: **RICHTER, Wolfgang, Chapfenböhlweg 2,
CH-9100 Herisau (CH)**

(74) Vertreter: **Wenger, René et al, Hepp & Partner AG
Marktgasse 18, CH-9500 WII (CH)**

## Beschreibung

Die Erfindung bezieht sich auf eine Vorrichtung gemäss dem Oberbegriff von Anspruch 1. Derartige Vorrichtungen werden unter anderem bei der Massanalyse eingesetzt. Gebräuchliche Ausführungsformen sind z.B. Kolbenbüretten, wie beispielsweise in der EP-A-96 088 beschrieben. Die Betätigung des Kolbens kann von Hand oder über einen Hilfsantrieb erfolgen. Die axakte Anzeige des Volumens in der Kammer in Abhängigkeit von der Kolbenposition erfolgt heute in der Regel elektronisch.

Durch die EP-A-1137 ist eine bürettenartige Vorrichtung bekannt geworden, bei der eine Zylinderkammer durch Betätigen eines Kolbens schrittweise vergrösserbar ist, während wahlweise verschiedene Anschlussleitungen mit der Kammer kurzgeschlossen werden können. Die qualitative Bestimmung der Flüssigkeit erfolgt durch Ausstossen in eine Reaktions-Messkammer ausserhalb der Zylinderkammer.

Alle bekannten Kolbenbüretten haben den Nachteil, dass ihr Kammervolumen nicht von Null ausgehend vergrösserbar ist, bzw. dass nicht der gesamte Kammerinhalt auspressbar ist. Dies hängt damit zusammen, dass auch bei unmittelbar an der Kammer angeordneten Hahnen oder Ventilen immer ein Raum verbleibt, welcher mit dem Kolben nicht ausstossbar ist. Je nach Verwendungszweck der Bürette kann diese Restmenge das Messergebnis in qualitativer und quantitativer Hinsicht beeinträchtigen. Dies ist besonders dann von Bedeutung, wenn die Kammer der Bürette selbst unmittelbar als Reaktionskammer verwendet wird. Um dabei die Kammer in einer bestimmten Reihenfolge mit verschiedenen Reagenzien, Hilfs- und Messlösungen zu füllen, bzw. zu spülen, ist es zwingend erforderlich, dass exakt definierbare Mengen in die Kammer gelangen und dass beim Ausstossen keine Restmengen in der Kammer verbleiben, welche eine nachfolgende Messung beeinträchtigen würden.

Es ist daher eine Aufgabe der Erfindung, eine Vorrichtung der eingangs genannten Art zu schaffen, deren Kammer von Null ausgehend vergrösserbar ist bzw. welche ohne Zurückbleiben einer Restmenge vollständig ausstossbar ist. Eine weitere Aufgabe der Erfindung besteht darin, auf konstruktiv einfache Weise möglichst mehrere Kanäle in die Kammer zu führen, welche wahlweise derart an die Kammer anschliessbar sind, dass beim Wechseln von einem auf einen anderen Kanal keine durch die Messeinrichtung nicht registrierbaren Restmengen von Flüssigkeit in der Kammer verbleiben. Ausserdem soll die Automatisierung von derartigen quantitativen und/oder qualitativen Bestimmungen auf einfache Weise ermöglicht werden. Diese Aufgabe wird erfindungsgemäss durch eine Vorrichtung gelöst, welche die Merkmale im Kennzeichen von Anspruch 1 aufweist.

Indem Wandabschnitte der Kammer selbst als Absperrorgan ausgebildet sind, kann mit der Kammer auf überraschend einfache Weise vom Kammervolumen Null ausgehend eine bestimmte Flüssigkeitsmenge aufgenommen werden, bzw. es kann von einer ersten auf eine zweite Flüssigkeit gewechselt werden, ohne dass von der ersten Flüssigkeit eine nicht kontrollierbare Restmenge in der Kammer zurückbleibt. Besonders vorteilhaft lässt sich dieses Prinzip realisieren, wenn die Kammer durch einen Zylinder gebildet wird, in dem zum Verändern des Volumens ein Kolben angeordnet ist, und wenn das Absperrorgan durch einen am Zylinderboden angeordneten Wandabschnitt gebildet ist, der relativ zum Zylindermantel verschiebbar ist. Das Absperrorgan kann dadurch bei jeder beliebigen Kolbenposition betätigt werden. Liegt der Kolben am Zylinderboden auf, so ist das Kammervolumen gleich Null. Wird der Kolben vom Zylinderboden wegbewegt, so entspricht jede Kolbenposition exakt einer genau definierbaren Flüssigkeitsmenge im Zylinder, und zwar auch dann, wenn das Absperrorgan geschlossen wird oder wenn vom einen Kanal auf einen anderen Kanal gewechselt wird. Unter der Bezeichnung Kolben ist in bestimmten Anwendungsfällen auch ein Drehkolben zu verstehen, mit dem nach dem bekannten Prinzip des Wankelmotors ein Kammervolumen mit einer Drehbewegung verändert werden kann.

Je nach der gewählten Bauweise können die Öffnungen der in die Kammer mündenden Kanäle im verschiebbaren Wandabschnitt am Zylinderboden oder im Zylindermantel angeordnet sein. Eine besonders einfache Bauweise ergibt sich jedoch, wenn der verschiebbaren Wandabschnitt der ganze Zylinderboden ist, der dichtend an der Stirnseite des Zylindermantels anliegt, und wenn die Öffnungen durch die Stirnseite des Zylindermantels verschliessbar sind. Die abzudichtende Fläche ist dadurch als Ebene ausgebildet, was die Bearbeitung der Dichtfläche ganz wesentlich vereinfacht. Die Stirnseite des Zylinders kann problemlos als Kreisringfläche ausgebildet werden, welche genügend breit ist, um eine Anschlussöffnung abzudecken.

Diese Ausbildung erlaubt es auch, auf besonders einfache Weise mehrere Öffnungen am Zylinderboden vorzusehen, welche verschiedenen Kanälen zugeordnet sind, ohne dass für die Zuschaltung einzelner Kanäle an die Kammer grosse Relativbewegungen zwischen Zylinderboden und Zylindermantel bzw. Stirnseite des Zylindermantels erforderlich sind.

Auf besonders vorteilhafte Weise lässt sich die Vorrichtung mechanisch betätigen und automatisieren, wenn der Zylinderboden eine Kreisscheibe ist, welche derart planparallel in einer Steuerscheibe liegt, dass die Steuerscheibe um die Kreisscheibe drehbar ist, wenn die Steuerscheibe drehfest, jedoch in der Ebene der Kreisscheibe verschiebbar mit einem Drehkranz verbunden ist, und wenn die Steuerscheibe zusammen mit der Kreisscheibe mit einer an der Steuerscheibe angreifenden Keilscheibe verschiebbar ist, welche zum Positionieren der Steuerscheibe zusammen mit dem Drehkranz und zum Verschieben der Kreisscheibe bei feststehendem Drehkranz separat um die Zylinderachse drehbar ist. Auf diese Weise lässt sich der Zylinderboden aus einer neutralen Position, in der sämtliche Öffnungen durch die Stirnseite des Zylindermantels verschlossen sind, in eine vorbestimmbare exzentrische Position verschieben, in der eine der Öffnungen zur Kammer hin freigegeben wird.

Ein motorischer Antrieb der Vorrichtung erfolgt besonders einfach dadurch, dass Drehkranz und Keilscheibe eine Aussenverzahnung aufweisen, so dass sie über ein Zahnradgetriebe einzeln drehantreibbar sind. Eine äusserst präzise Abdichtung am Zylinderboden ergibt sich, wenn Zylindermantel und Zylinderboden aus einem keramischen Werkstoff oder einem anderen geeigneten Material, wie z.B. Siliziumkarbid oder Sinterwerkstoff gefertigt sind. Diese Werkstoffe lassen sich äusserst präzis bearbeiten und sind ausserdem weitgehend chemisch resistent.

Ein ausserordentlich vielseitiger Einsatz der Vorrichtung kann erreicht werden, wenn im Inneren der Kammer wenigstens ein Sensor für die qualitative Bestimmung der Flüssigkeit angeordnet ist. Dabei ist lediglich zu beachten, dass durch die Sensoranordnung kein Totraum in der Kammer entsteht.

Die Erfindung betrifft auch ein Verfahren zur qualitativen und/oder quantitativen Bestimmung von Flüssigkeiten, welche durch die Merkmale in Anspruch 8 gekennzeichnet ist.

Ausführungsbeispiele der Erfindung sind in den Zeichnungen dargestellt und werden nachstehend genauer beschrieben. Es zeigen:

Fig. 1 ein Ausführungsbeispiel mit plan verschiebbarem Zylinderboden,

Fig. 2 ein Ausführungsbeispiel mit Schrägkolben und um die Zylinderachse verschiebbarem Zylinderboden,

Fig. 3 ein Ausführungsbeispiel mit einem quer zur Zylinderachse verschiebbaren Drehschieber am Zylinderboden,

Fig. 4 einen Querschnitt durch eine bevorzugte Ausführungsform einer Vorrichtung,

Fig. 5 bis 8 Querschnitte durch die Ebene I-I gemäss Figur 4 bei verschiedenen Positionen der Kreisscheibe,

Fig. 9 eine Draufsicht auf die Steuerscheibe gemäss Figur 4,

Fig. 10 die schematische Darstellung der Verwendung einer erfindungsgemässen Vorrichtung als Reaktionszelle, und

Fig. 11 die schematische Darstellung der Verwendung einer erfindungsgemässen Vorrichtung mit separater Reaktionszelle.

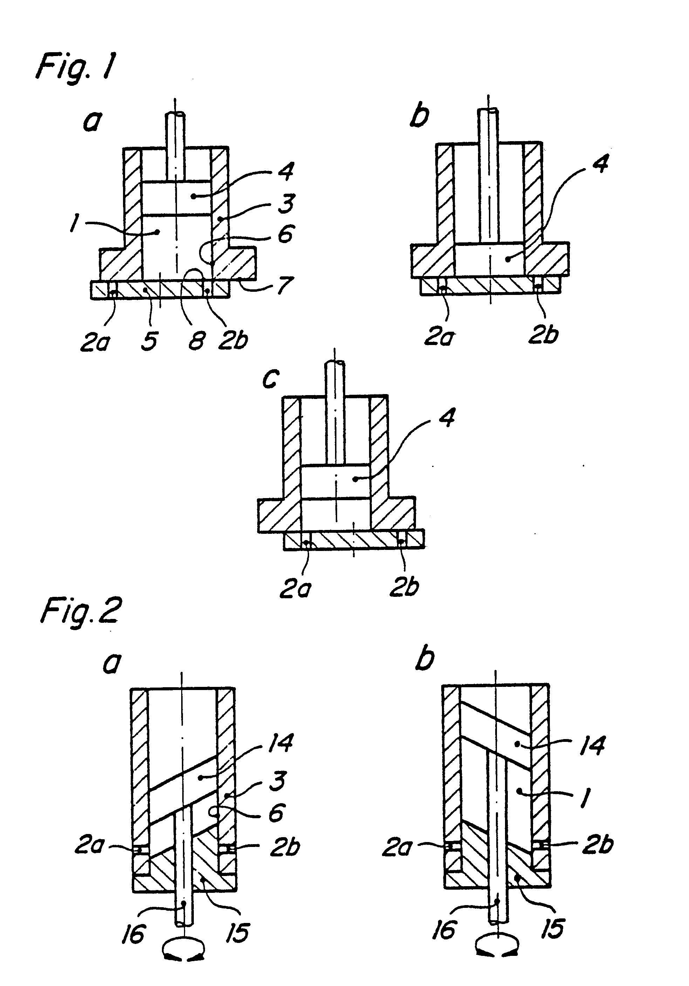

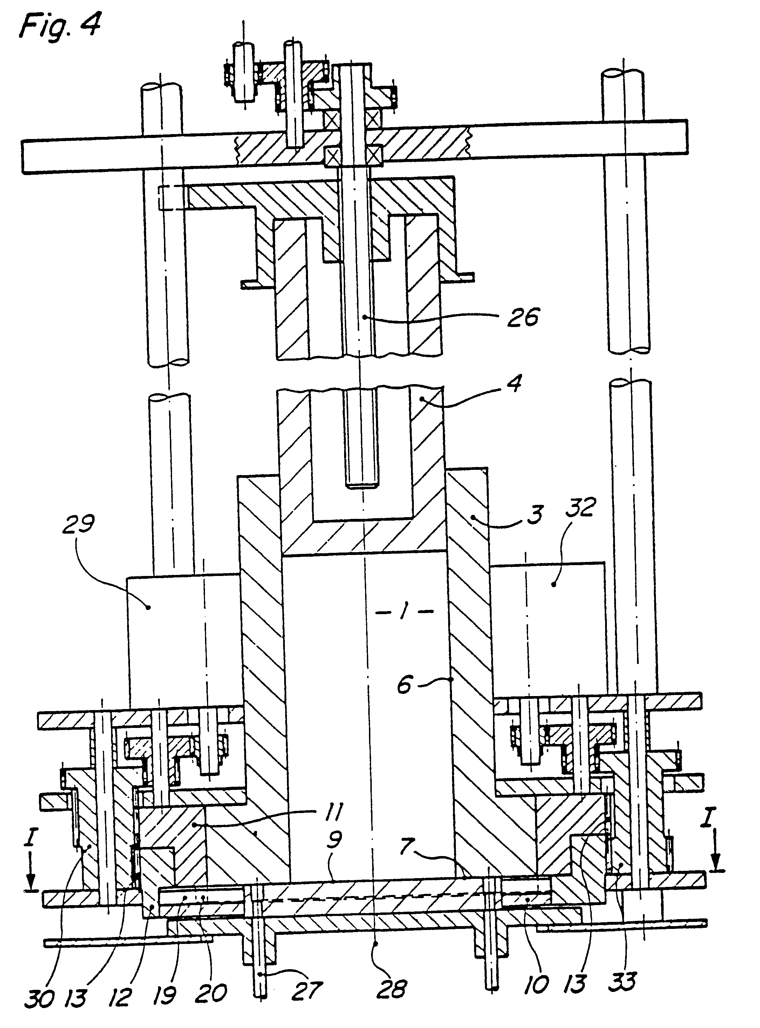

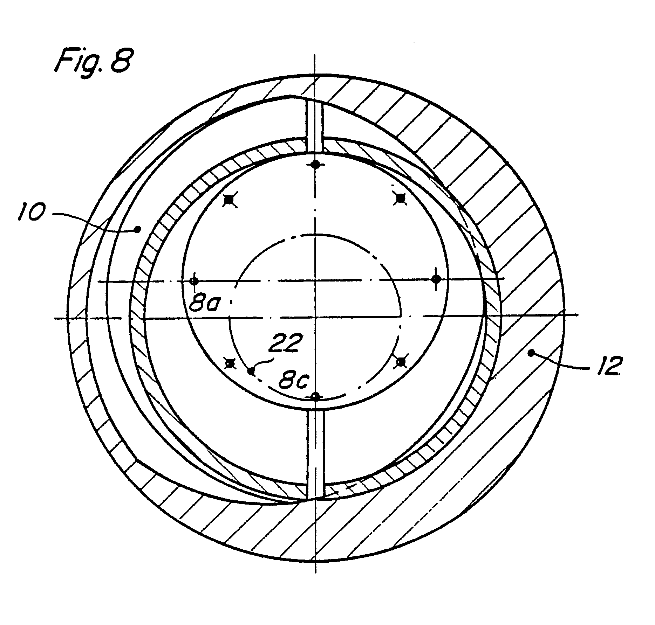

Die Figuren 1 bis 3 zeigen verschiedene mögliche Varianten einer erfindungsgemässen Vorrichtung, wobei zahlreiche Abwandlungen oder Zwischenformen oder gar Kombinationen denkbar sind. Das Ausführungsbeispiel gemäss Fig. 1 entspricht im Prinzip der in den Figuren 4 bis 9 dagestellten Funktionsweise. Die Kammer 1 wird definiert durch einen Zylinder 3, einen verschiebbaren Kolben 4 und einen Zylinderboden 5. Der Zylinderboden 5 liegt dichtend an der Stirnseite 7 des Zylinders 3 an und ist relativ zum Zylinder verschiebbar. Im Zylinderboden 5 sind beispielsweise zwei Kanäle 2a und 2b angeordnet, welche durch die Stirnseite 7 verschliessbar sind. Ersichtlicherweise wirkt die Stirnseite 7 in Kombination mit dem Zylinderboden 5 unmittelbar als Absperrorgan, bei dessen Betätigung kammerseitig kein Restvolumen verbleibt, welches nicht durch den Kolben ausstossbar wäre. Figur 1a zeigt den Kolbenboden 5 in einer Position, in der der Kanal 2b mit der Kammer 1 kurzgeschlossen ist. In Figur 1b ist der Zylinderboden in einer neutralen Mittelposition, in der beide Kanäle 2a und 2b durch die Stirnseite 7 verschlossen sind. Der Kolben 4 liegt auf dem Zylinderboden 5 auf, so dass das Kammervolumen ohne Zurückbleiben einer Restmenge gleich Null ist. Bei Figur 1c ist der Kanal 2a mit der Kammer kurzgeschlossen, während der Kanal 2b verschlossen ist.

In der Praxis könnte Figur 1 beispielsweise einen Messablauf darstellen, indem bei Figur 1a über den Kanal 2b die Kammer mit einer Reinigungslösung gespült wird. Die Reinigungslösung wird anschliessend über den Kanal 2b durch Herunterpressen des Kolbens 4 vollständig aus der Kammer entfernt, wonach der Kanal 2b abgekoppelt wird, wie dies in Figur 1b dargestellt ist. Anschliessend wird gemäss Fig. 1c über den Kanal 2a vom Kammervolumen Null ausgehend eine bestimmte Menge einer Flüssigkeit in die Kammer 1 eingesaugt. Ersichtlicherweise können im Zylinderboden 5 mehrere Kanäle 2 angeordnet sein, welche in einer bestimmten oder in einer beliebigen Reihenfolge mit der Kammer 1 kurzgeschlossen werden können. Der Zylinderboden 5 muss dabei nicht notwendig als Scheibe ausgebildet sein. Der Zylinderboden muss auch nicht zwingend plan ausgebildet sein. Es wäre auch denkbar, die Oberfläche des Zylinderbodens kugelkalottenförmig auszubilden, wobei allerdings auch die Stirnseite 7 und die untere Begrenzungsfläche des Kolbens 4 die gleiche Kalottenform aufweisen müssten.

Figur 2 zeigt ein Ausführungsbeispiel, bei dem die Kanäle 2 nicht am Zylinderboden, sondern am Zylindermantel 6 angeordnet sind. Das Volumen der Kammer 1 wird definiert durch die Innenwand des Zylindermantels 6 sowie durch die Begrenzungsfläche eines Schrägkolbens 14 und eines Bodenzapfens 15. Der Bodenzapfen 15 ist drehfest mit der Kolbenstange 16 verbunden und kann somit zusammen mit dem Schrägkolben 14 um die Zylinderachse gedreht werden. Bei vollständig auf dem Bodenzapfen 15 aufliegendem Schrägkolben 14 ist das Kammervolumen gleich null. Figur 2a zeigt eine Position, bei der der Kanal 2a mit der Kammer kurzgeschlossen ist. Der Bodenzapfen 15 verdeckt dabei mit seinem oberen Abschnitt den gegenüberliegenden Kanal 2b. Figur 2b zeigt eine Position, bei der die Anordnung, bestehend aus Schrägkolben 14 und Bodenzapfen 15, um 180° gedreht wurde. Dabei wird ersichtlicherweise der Kanal 2a verschlossen, während der Kanal 2b mit der Kammer 1 kurzgeschlossen wird. Selbstverständlich müssen die Kanäle derart angeordnet sein, dass bei jedem Kanal das Kammervolumen auf Null reduziert werden kann. Auch bei diesem Ausführungsbeispiel können ersichtlicherweise mehr als zwei Kanäle an die Kammer angeschlossen werden.

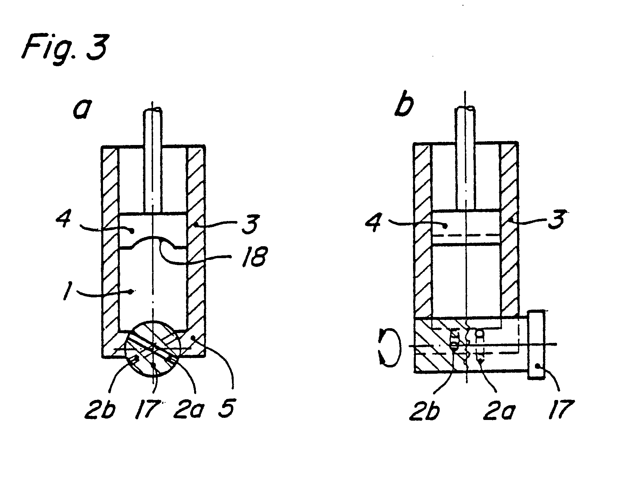

Schliesslich zeigt Figur 3 ein Ausführungsbeispiel, wei welchem am Zylinderboden 5 des Zylinders 3 ein Drehschieber 17 angeordnet ist, der um eine quer zur Zylinderachse verlaufende Achse drehbar ist. Figur 3b zeigt dabei einen Teilquerschnitt durch Figur 3a. Der Drehschieber 17 ragt mit einem bestimmten Abschnitt in die Kammer 1 und bildet so einen Teil der inneren Begrenzungsfläche der Kammer. Die beiden Kanäle 2a und 2b sind derart im Drehschieber 17 angeordnet, dass in einer neutralen Position beide Kanäle durch den Zylinderboden 5 verdeckt werden. Durch Verdrehen des Drehschiebers 17 in die eine oder andere Richtung kann entweder der Kanal 2a oder der Kanal 2b mit der Kammer 1 kurzgeschlossen werden. Um eine Reduktion des Kammervolumens auf Null zu ermöglichen, muss der Kolben 4 ersichtlicherweise eine Kolbenausnehmung 18 aufweisen, die mit dem in die Kammer 1 ragenden Teil des Drehschiebers 17 korrespondiert. Auch bei diesem Beispiel kann der Drehschieber 17 mit mehreren, nebeneinanderliegenden Kanälen 2 versehen sein.

Figur 4 zeigt im Detail eine bevorzugte Ausführungsform der Erfindung, bei welcher die Positionierung und Verschiebung des Zylinderbodens über einen Motorantrieb erfolgt. Hauptmerkmale der in Figur 4 dargestellten Dosiervorrichtung sind wiederum der Zylinder 3 mit einem darin verschiebbaren Kolben 4 sowie der als Kreisscheibe 9 ausgebildete Zylinderboden 5. Der Kolben 4 ist über eine Spindel 26 mit einem nicht näher dargestellten Motor verschiebbar. Die Relativlage des Kolbens 4 wird in bekannter Weise als bestimmtes Volumen in der Kammer 1 ausgedrückt und angezeigt.

Der Zylindermantel 6 hat im unteren Bereich einen etwas breiteren Wandabschnitt, so dass die Stirnseite 7 des Zylindermantels etwas breiter ist als der restliche Mantel. Die Kreisscheibe 9 ist flüssigkeitsdicht an die Stirnseite 7 angepresst. Durch die feine Bearbeitung der Dichtflächen wird die Kreisscheibe 9 allein schon durch Adhäsionskräfte an der Stirnseite 7 gehalten. Je nach den in der Kammer 1 zu erwartenden Innendrücken kann die Kreisscheibe 9 jedoch zusätzlich mittels Federkraft an die Stirnseite 7 gepresst werden.

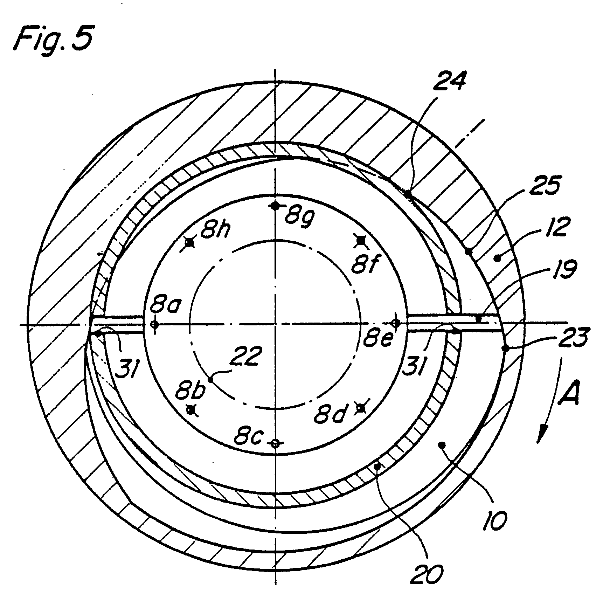

Wie insbesondere aus Figur 5 ersichtlich ist, weist die Kreisscheibe 9 an ihrem Umfangsbereich in gleichmässiger Winkelteilung acht Öffnungen 8a bis 8h auf, wobei jede Öffnung mit einem separaten Schlauch 27 verbunden ist.

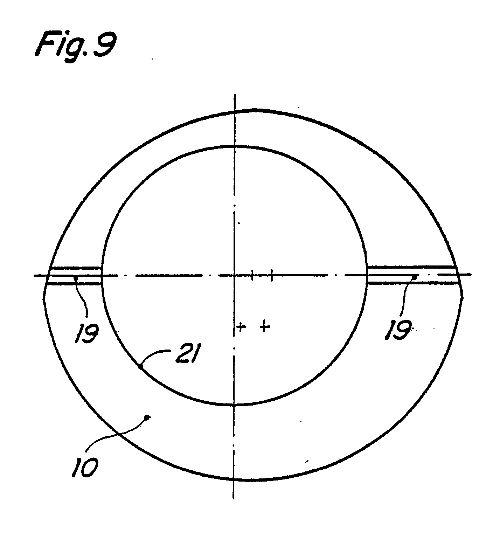

Die Kreisscheibe 9 liegt parallel in einer Steuerscheibe 10, welche der besseren Übersichtlichkeit halber in Figur 9 separat dargestellt ist. Die Steuerscheibe 10 weist eine Bohrung 21 auf, in welche die Kreisscheibe 9 drehbeweglich hineinpasst. Auf beiden Seiten der Bohrung 21 ist auf der Steuerscheibe 10 eine Rippe 19 auf einer Achse angeordnet, welche durch das Zentrum der Bohrung 21 bzw. der Kreisscheibe 9 führt.

Über der Steuerscheibe 10 ist ein Drehkranz 11 angeordnet, der um die Zylinderachse 28 drehbar ist. Der Drehkranz 11 ist direkt auf dem Zylinder 3 gelagert und mit einer Aussenverzahnung 13 versehen. Der Drehkranz 11 ist mittels dem Motor 29 über ein Zahnrad 30 antreibbar. Der Drehkranz 11 ist an seiner Unterseite mit einem Mitnehmerrohr 20 versehen, welches zwei einander diametral gegenüberliegende Nuten 31 aufweist.

Die Rippen 19 der Steuerscheibe 10 greifen in die Nuten 31 des Mitnehmerrohres 20. Ersichtlicherweise ist dadurch die Steuerscheibe 10 drehfest mit dem Drehkranz 11 verbunden, wobei sich jedoch die Steuerscheibe 10 relativ zum Drehkranz 11 in der Achse der Rippen 19 verschieben lässt. Diese Verschiebemöglichkeit ist Voraussetzung, um die Kreisscheibe 9 von einer neutralen Mittelposition mit geschlossenen Öffnungen in eine Öffnungsposition zu bringen, wie nachstehend noch aufgezeigt wird.

An der Steuerscheibe 10 greift am Aussenbereich eine Keilscheibe 12 an, welche wie der Drehkranz 11 ebenfalls um die Zylinderachse 28 gedreht werden kann. Wie in Figur 4 dargestellt, ist die Keilscheibe 12 zu diesem Zweck direkt auf dem unteren Bereich des Drehkranzes 11 beweglich gelagert. Der nicht rotationssymmetrisch ausgebildete Bereich der Keilscheibe 12 ist in den Figuren 5 bis 8 als schraffierte Fläche dargestellt. Auch die Keilscheibe 12 weist eine Aussenverzahnung 13 auf und ist über einen separaten Motor 32 und über ein Zahnrad drehantreibbar. Da die Aussenverzahnung am Drehkranz 11 und an der Keilscheibe 12 vorzugsweise die gleiche Zähnezahl und den gleichen Nenndurchmesser aufweist, ist es selbstverständlich auch denkbar, nur einen einzigen Antriebsmotor zu verwenden und den wechselweisen Antrieb von Drehkranz 11 und Keilscheibe 12 über ein verschiebbares Zahnrad zu erreichen.

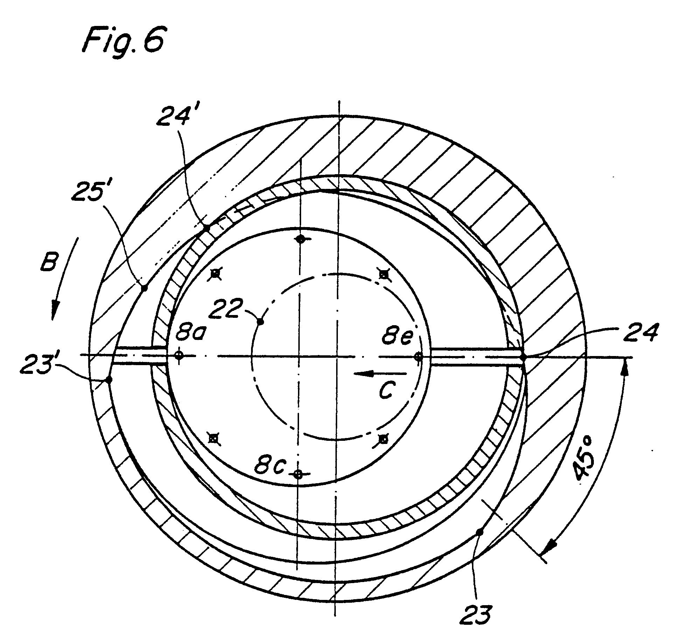

Die Funktion der Vorrichtung wird nun insbesondere anhand der Figuren 5 bis 8 genauer erläutert. In Figur 5 ist die Zylinderbohrung 22 als strichpunktierte Linie dargestellt. Die Kreisscheibe 9 ist wie bei Figur 4 in einer neutralen Position angeordnet, bei sämtliche Öffnungen 8a bis 8h ausserhalb der Zylinderbohrung 22 liegen und damit durch die Stirnseite 7 des Zylindermantels 6 verdeckt werden. Wird nun ein Anschluss der Öffnung 8e an die Kammer gewünscht, so wird die Keilscheibe 12 in Pfeilrichtung A gedreht, während der Drehkranz 11 bzw. das Mitnehmerrohr 20 festgehalten wird. Bei dieser Drehbewegung übt ein Keilabschnitt 25, der bei Position 23 beginnt und bei Position 24 endet, eine Kraft auf die Steuerscheibe 10 aus. Wegen des feststehenden Mitnehmerrohres 20 kann die Steuerscheibe 10 nur in Pfeilrichtung C ausweichen, so dass sie sich zusammen mit der Kreisscheibe 9 in die in Figur 6 dargestellte Position verschiebt. Die Öffnung 8e gelangt dabei in den Bereich der Zylinderbohrung 22, so dass über diese Öffnung eine Flüssigkeit angesaugt oder ausgestossen werden kann. Bis zum Erreichen der Öffnungsposition legt die Keilscheibe 12 eine Drehung von ca. 45° zurück.

Für das Zurückschwenken in die neutrale Schliessposition wird die Keilscheibe 12 in Pfeilrichtung B gedreht. Dabei wirkt mit Keilabschnitt 25' eine Kraft auf die Steuerscheibe 10. Die Drehbewegung in Pfeilrichtung B wird so lange fortgesetzt, bis die Kreisscheibe 9 wieder die in Figur 5 dargestellte Position einnimmt.

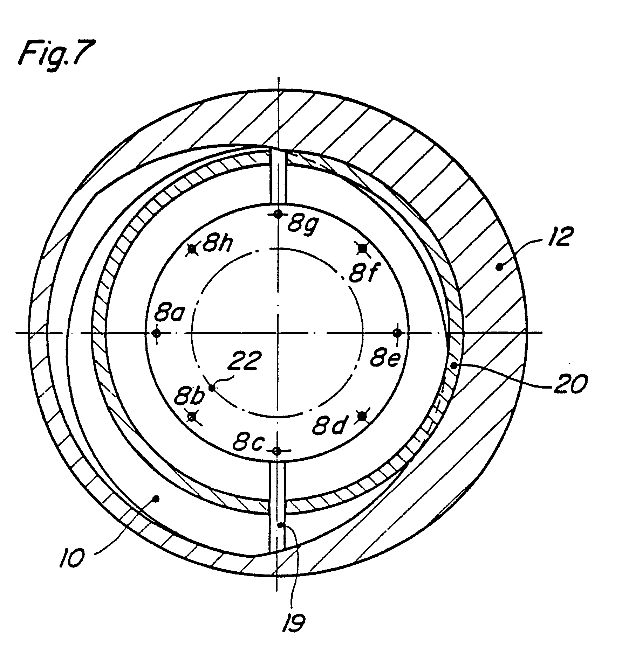

Wird nun beispielsweise ein Anschluss der Öffnung 8c an die Kammer 1 gewünscht, so wird der Drehkranz 11 mit dem Mitnehmerrohr 20, die Keilscheibe 12 und die Steuerscheibe 10 um die Kreisscheibe 9 bzw. um die Zylinderachse 28 gedreht, bis sie die in Figur 7 dargestellte Position einnimmt. Die Kreisscheibe 9 verändert dabei ihre Relativlage nicht, sondern verbleibt unbeweglich an der Stirnseite 7 des Zylindermantels 6. Sobald die Achse der Rippe 19 mit der gewünschten Verschiebeachse der Kreisscheibe 9 übereinstimmt, wird der Drehkranz 11 bzw. das Mitnehmerrohr 20 angehalten und fixiert. Anschliessend wird wiederum die Keilscheibe 12 betätigt, so dass sich die Steuerscheibe 10 mit der Kreisscheibe 9 auf die bereits beschriebene Art und Weise verschieben. Da sich die Relativlage der Steuerscheibe 10 zur Kreisscheibe 9 jedoch um 90° verändert hat, wird nun nicht die Öffnung 8e sondern die Öffnung 8c in den Bereich der Zylinderbohrung 22 geschoben und damit mit der Kammer kurzgeschlossen. Auf die gleiche Art und Weise lässt sich jede der Öffnungen 8a bis 8h in beliebiger Reihenfolge mit der Kammer kurzschliessen. Dadurch können äusserst einfach und präzise verschiedene Flüssigkeiten exakt abgemessen in die oder aus der Kammer gebracht werden.

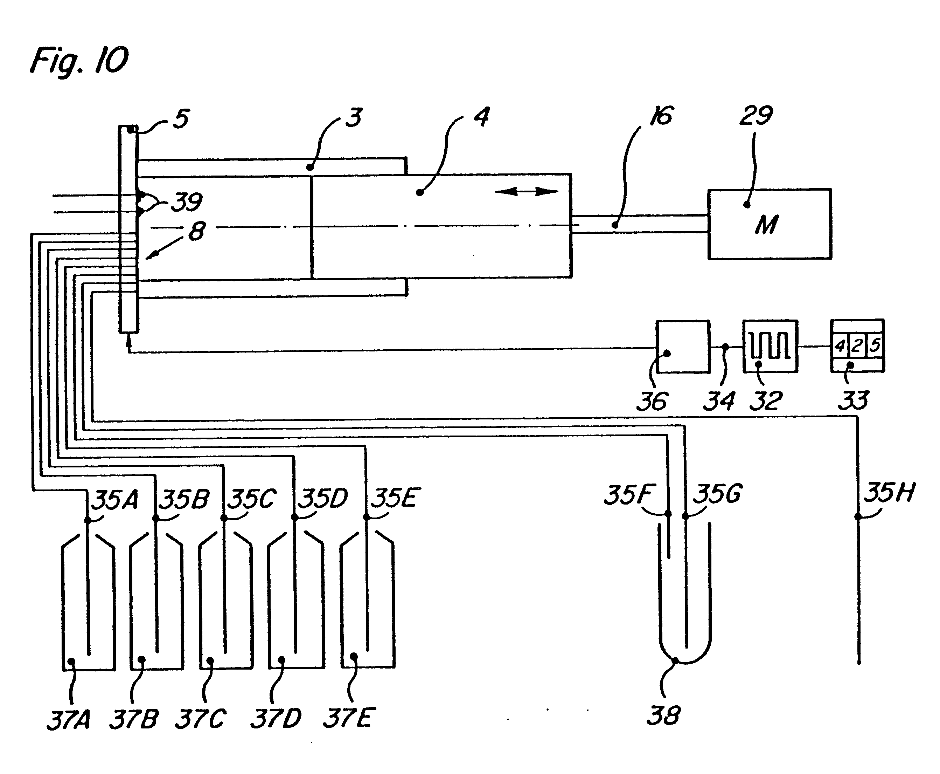

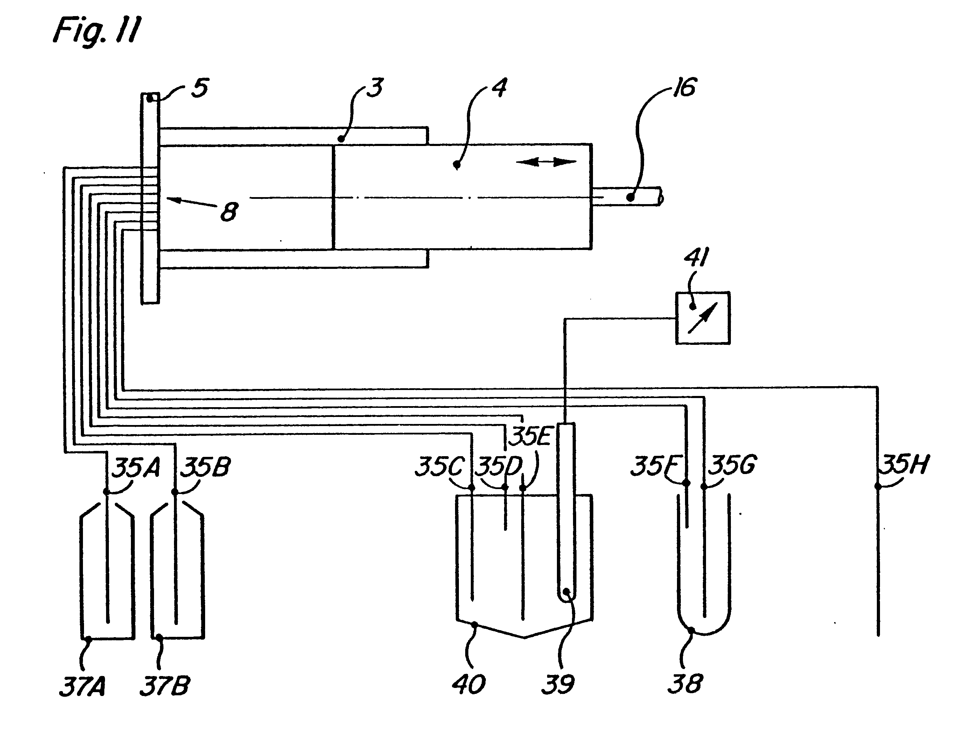

Die praktische Verwendung der Vorrichtung in einer Messanordnung wird nachstehend anhand der Figuren 10 und 11 beschrieben.

Gemäss Figur 10 ist ein Dosierzylinder 3 mit einem Kolben 4 versehen, der mittels eines Antriebselements 29 um vorbestimmbare oder vom Messwert abhängige Volumenteile im Dosierzylinder 3 verschiebbar ist. Das Antriebselement 29, z.B. ein Linearmotor, wird in bekannter Weise von einem Steuergerät aktiviert, das mit einer Zähl- und Vorwähleinrichtung 33 verbunden ist. Das Steuergerät 32 gibt in bekannter Weise Impulse an das Antriebselement ab, die eine der Anzahl der Impulse proportionale Verlagerung einer Kolbenstange 16 und damit des Kolbens 4 bewirkt. Durch den Zähler 33 kann durch Vorwahl die Anzahl der vom Steuergerät 32 abzugebenden Impulse und damit die Verlagerung des Antriebselements 29 eingestellt werden. Da die Verlagerung der Kolbenstange 16 durch das Antriebselement proportional zur Volumenänderung im Dosierzylinder 3 ist, kann auf diese Weise am Zähler 33 eine gewünschte Volumenänderung voreingestellt werden. Alternativ ist es auch möglich, das Steuergerät 32 zu aktivieren und damit durch entsprechende Verlagerung des Antriebselements 29 bzw. der Kolbenstange 16 eine Volumenänderung zu bewirken und die Volumenänderung am Zähler 33 abzulesen. Diese Methode wird z.B. angewandt werden, wenn im Dosierzylinder 3 titriert wird. Zum Einbringen von Lösungen sind im Zylinderboden 5 des Dosierzylinders 3 acht verschiedene Zuleitungsanschlüsse bzw. Öffnungen 8 für die Leitungen 35A bis 35H vorgesehen. Die Ansteuerung des Absperrorgans zum Öffnen bzw. Schliessen dieser Öffnungen erfolgt durch die Ventilsteuereinrichtung 36. Die Ventilsteuereinrichtung 36 ist ausserdem durch eine Verbindungsleitung 34 mit dem Steuergerät 32 verbunden. Über die Verbindungsleitung 34 werden Kontrollimpulse an das Steuergerät 32 abgegeben, welche bewirken, dass das Antriebselement 29 nur dann aktiviert wird, wenn durch die Ventilsteuereinrichtung 36 eine der Öffnungen 8 geöffnet ist. Die Zufuhrleitungen 35A bis 35F werden aus schematisch dargestellten Behältern 37A bis 37E mit Reagenzien und Hilfslösungen gespeist. Die Zufuhr-Leitungen 35F und 35G sind mit einem Messlösungs-Behälter 38 versehen. Eine Abfall-Leitung 35H geht in einen nicht dargestellten Abfallbehälter.

Zur Bestimmung einer im Messlösungs-Behälter 38 befindlichen Messlösung z.B. durch Titration wird die Anordnung wie folgt beschrieben:

Zunächst wird durch die Ventilsteuereinrichtung 36 die mit der Abfall-Leitung 35H verbundene Öffnung geöffnet. Sodann wird das Steuergerät 32 aktiviert, um den Kolben 4 bis zum Anschlag nach links zu schieben. Dabei wird über die Abfall-Leitung 35H das im Dosierzylinder 3 befindliche Lösungsgemisch ausgestossen. Sodann wird die mit der Abfall-Leitung 35H verbundene Öffnung wieder geschlossen. Zum Reinigen des Dosierzylinders 3 wird sodann durch die Ventilsteuereinrichtung 36 die mit der Leitung 35A verbundene Öffnung geöffnet, durch das Steuergerät wird das Antriebselement 29 aktiviert und es wird durch entsprechende Verlagerung des Kolbens 4 Reinigungslösung aus dem Behälter 37A in den Dosierzylinder 3 aufgesaugt. Die Öffnung in der Leitung 35A wird wieder geschlossen und die Öffnung in der Leitung 35H wird geöffnet, um durch Verlagern des Kolbens 4 in die linke Position die Reinigungslösung auspressen zu können.

Die Öffnung in der Leitung 35H wird sodann wieder geschlossen und die Öffnung in der Leitung 35G geöffnet. An der Zähl- und Vorwahleinrichtung 33 kann sodann die gewünschte Volumenmenge vorgewählt werden, worauf das Steuergerät 32 das Antriebselement 29 aktiviert, und durch Verschieben des Kolbens 4 eine Volumenvergrösserung im Dosierzylinder 3 um den gewünschten Betrag bewirkt. Dabei wird aus dem Messlösungs-Behälter 38 die gewünschte Lösungsmenge angesaugt. Sodann wird die der Leitung 35G zugeordnete Öffnung geschlossen und die Öffnung in der Leitung 35B geöffnet. Im Behälter 37B befindet sich eine für die durchzuführende Titration geeignete Hilfslösung. Sodann wird das Steuergerät 32 kontinuierlich oder in einzelnen Schritten aktiviert, bis im Dosierzylinder 3 eine geeignete Messwertänderung der Sensoren in bekanntner Weise zu beobachten ist. Dann wird das Steuergerät 32 abgeschaltet, wobei am Zähler 33 die Menge der bis zum Reaktionseintritt über die Leitung 35B angesaugten Hilfslösung ablesbar ist.

Um die Durchmischung der Flüssigkeiten in der Kammer zu beschelunigen, kann ein Rotations- oder Vibrationskörper an oder in der Kammer angeordnet sein. Ähnlich wie bei den Sensoren ist dabei ein Totvolumen zu vermeiden. So wäre es z.B. denkbar, den Kolben selbst rotieren und/oder pulsieren zu lassen.

Die Behälter 37C bis E sind für weitere Hilfslösungen bei mehrstufigen Verfahren vorgesehen. Über die Leitung 35F lässt sich im Verfahrensablauf auch z.B. Reinigungslösung aus dem Behälter 37A in den Dosierzylinder 3 ansaugen und sodann in den Messbehälter 38 spritzen, so dass dieser gereinigt wird. Über die Leitung 35G kann der Messlösungs-Behälter 38 sodann wieder abgesaugt werden und durch entsprechende Ventilbetätigung dann die Reinigungslösung über die Leitung 35H an den nicht dargestellten Abfallbehälter gegeben werden.

Im Zylinderboden 5 sind, wie schematisch dargestellt, zwei ionensensitive Elektroden 39 als Sensoren angeordnet, welche zur Ionengehaltsbestimmung in an sich bekannter Weise vorgesehen sind. Die Elektroden fluchten mit der Innenwand des Zylinderbodens, so dass beim Entleeren des Dosierzylinders 3 kein Totraum entsteht. Die Elektroden 39 sind an eine nicht dargestellte Auswertungsschaltung angeschlossen. Ersichtlicherweise lässt sich auf einfache Weise im Dosierzylinder 3 eine äusserst exakte Ionengehaltsbestimmung durchführen. Genau vorbestimmte Mengen an Messlösung und Reagenzien bzw. Hilfslösungen können sequentiell und ohne zusätzliche Dosiereinrichtungen, wie z.B. Büretten, angesaugt und direkt im Dosierzylinder 3 bestimmt werden.

Selbstverständlich lassen sich die ionensensitiven Elektroden 39 durch beliebig andere Sensoren ersetzen, je nachdem, welche Art der Reaktion oder Bestimmung im Dosierzylinder 3 durchgeführt werden soll.

Figur 11 zeigt ein abgewandeltes Ausführungsbeispiel, bei welchem die Bewegung der Kolbenstange 16 und die Ansteuerung des Absperrorgans identisch wie beim Ausführungsbeispiel gemäss Figur 10 erfolgt. Ventilsteuereinrichtung 36, Steuergerät 32 und Zähl- und Vorwahleinrichtung 33 sowie Antriebselement 29 sind deshalb der Übersichtlichkeit halber nicht dargestellt. Beim Ausführungsbeispiel gemäss Figur 11 sind lediglich zwei Behälter 37A bzw. 37B für Reagenzien und Hilfslösungen vorgesehen, in welchen sich die zu analysierende Lösung befindet. Im Unterschied zum Ausführungsbeispiel gemäss Figur 10 ist noch zusätzlich eine Reaktionsbzw. Messzelle 40 über Leitungen 35C, 35D und 35E mit dem Dosierzylinder 1 verbunden. Zum Dosieren von Messlösungen und Hilfslösungen wird wie beim Ausführungsbeispiel gemäss Figur 10 durch entsprechende sequentielle Betätigung des Absperrorgans und gleichzeitiges Vergrössern des Volumens des Dosierzylinders 3 durch Verschieben des Kolbens 4 die gewünschte Mischung angesaugt. Danach wird jedoch der Inhalt des Dosierzylinders 3 nach Öffnung der entsprechenden Öffnung über die Leitung 35C in die Reaktions-Messzelle 40 ausgestossen und dort mittels eines Sensors 39 und einer Auswertungseinrichtung 41 analysiert.

Ersichtlicherweise lässt sich die Anordnung gemäss Figur 10 auch mit einer Anordnung gemäss Figur 11 kombinieren. So können z.B. im Zylinderboden 5 für bestimmte Analysen verschiedene Sensoren vorgesehen werden. Mittels dieser Sensoren kann dann eine Bestimmung der Lösungen direkt im Dosierzylinder 3 in der beschriebenen Weise erfolgen. Soll darüber hinaus eine weitere Analyse durchgeführt werden, für welche die eingebauten Elektroden 39 nicht geeignet sind, kann eine zusätzliche Reaktions-Messzelle 40 mit dem Dosierzylinder 3 verbunden werden.

**Patentansprüche**

1. Vorrichtung zur qualitativen und/oder quantitativen Bestimmung von Flüssigkeiten, bei der das Volumen einer geschlossenen Kammer (1) zum Dosieren der Flüssigkeitsmenge veränderbar ist, und bei der wenigstens zwei Kanäle (2) für die Zu- und Abfuhr der Flüssigkeiten in die Kammer münden, wobei die Kammer (1) einerseits begrenzt wird durch einen Zylinder (3), in welchem ein Kolben (4) verschiebbar angeordnet ist, und andererseits durch einen Zylinderboden (5), dadurch gekennzeichnet, dass die Kanäle (2) ohne Absperrorgan durch den Zylinderboden (5) durchgeführt sind und in Öffnungen (8) auf dessen Innenseite enden, dass die Stirnwand des Zylinders (3) mit Dichtsitz auf dem Zylinderboden (5) anliegt, um die Öffnungen (8) zu verschliessen, wobei Zylinder (3) und Zylinderboden (5) derart relativ zueinander verschiebbar ausgebildet sind, dass Öffnungen (8) durch Relativ-Verschiebung freigebbar sind, so dass die Kammer (1) mit dem Kanal bzw. den Kanälen kommuniziert, die der jeweiligen Öffnung zugeordnet sind, und dass der Kolben (4) in der Ausstoss-Position zur Erreichung eines Nullvolumens in der Kammer (1) am Zylinderboden (5) anliegt.

2. Vorrichtung nach Anspruch 1, dadurch gekennzeichnet, dass mehrere Öffnungen (8a - 8h) separater Kanäle derart kreisförmig am Zylinderboden (5) angeordnet sind, dass alle Öffnungen durch die Stirnseite (7) des Zylindermantels (6) verschliessbar sind, und dass durch Verschieben des Zylinderbodens (5) relativ zur Zylinderachse jeweils wenigstens eine Öffnung freilegbar ist.

3. Vorrichtung nach Anspruch 2, dadurch gekennzeichnet, dass der Zylinderboden eine Kreisscheibe (9) ist, welche derart planparallel in einer Steuerscheibe (10) liegt, dass die Steuerscheibe (10) um die Kreisscheibe (9) drehbar ist, dass die Steuerscheibe (10) drehfest, jedoch in der Ebene der Kreisscheibe (9) verschiebbar mit einem Drehkranz (11) verbunden ist, und dass die Steuerscheibe (10) zusammen mit der Kreisscheibe (9) mit einer an der Steuerscheibe angreifenden Keilscheibe (12) verschiebbar ist, welche zum Positionieren der Steuerscheibe zusammen mit dem Drehkranz, und zum Verschieben der Kreisscheibe bei feststehendem Drehkranz separat um die Zylinderachse drehbar ist.

4. Vorrichtung nach Anspruch 3, dadurch gekennzeichnet, dass Drehkranz (11) und Keilscheibe (12) eine Aussenverzahnung (13) aufweisen und über ein Zahnradgetriebe einzeln drehantreibbar sind.

5. Vorrichtung nach einem der Ansprüche 2 bis 4, dadurch gekennzeichnet, dass der Zylindermantel (6) und Zylinderboden (5, 9) aus einem keramischen Werkstoff gefertigt sind.

6. Vorrichtung nach einem der Ansprüche 1 bis 5, dadurch gekennzeichnet, dass im Innern der Kammer wenigstens ein Sensor (39) für die qualitative Bestimmung des Kammerinhalts angeordnet ist.

7. Vorrichtung nach Anspruch 6, dadurch gekennzeichnet, dass der Sensor am Zylinderboden angeordnet ist.

8. Verfahren zur qualitativen und/oder quantitativen Bestimmung von Flüssigkeiten mit einer Vorrichtung gemäss Anspruch 1, dadurch gekennzeichnet, dass zunächst eine erste Zufuhrleitung geöffnet und das Kammervolumen vom Volumen Null ausgehend unter entsprechender Flüssigkeitszufuhr um einen vorbestimmbaren Volumenanteil vergrössert wird, dass sodann die erste Zufuhrleitung geschlossen wird und eine zweite sowie ggf. weitere Zufuhrleitungen sequentiell bei gleichzeitiger Volumenänderung geöffnet und dann wieder geschlossen werden, und dass nach Abschluss der Bestimmung der Kammerinhalt durch Verringerung des Kammervolumens auf Null ausgestossen wird.

9. Verfahren nach Anspruch 8, dadurch gekennzeichnet, dass zur Bestimmung der Flüssigkeit in der Kammer wenigstens ein in der Kammer angeordneter Sensor aktiviert wird.

10. Verfahren nach Anspruch 8 oder 9, dadurch gekennzeichnet, dass die Durchmischung der Flüssigkeiten in der Kammer mit einem Rotations- oder Vibrationskörper beschleunigt wird.

## Claims

1. Device for the qualitative and/or quantitative evaluation of liquids, in which the volume of a closed chamber (1) is changeable for the dosaging of the quality of liquid, and in which at least two channels (2) for the supply or removal of the liquids open into the chamber, in which the chamber (1) on the one hand is limited by a cylinder (3), in which a piston (4) is slidably arranged, and on the other hand by a cylinder base (5), characterized in that the channels (2) are passed without a shut-off element through the cylinder base (5) and terminate in openings (8) on its inner side, that the end wall of the cylinder (3) rests with a sealing seat on the cylinder base (5), in order to close the openings (8), in which the cylinder (3) and cylinder base (5) are constructed so as to be displaceable relative to each other, such that openings (8) are able to be freed through relative displacement, so that the chamber (1) communicates with the channel or respectively channels, which are associated with the respective opening, and that the piston (4) in the exhaust stroke position rests against the cylinder base (5) to achieve a zero volume in the chamber (1).

2. Device according to Claim 1, characterized in that several openings (8a - 8h) of separate channels are arranged in a circular shape on the cylinder base (5) such that all the openings are able to be closed by the face (7) of the cylinder jacket (6), and that through displacement of the cylinder (5) relative to the cylinder axis respectively at least one opening is able to be exposed.

3. Device according to Claim 2, characterized in that the cylinder base is a circular disc (9), which lies in plane parallel manner in a control disc (10) such that the control disc (10) is rotatable about the circular disc (9), that the control disc (10) is connected so as to be secure as regards rotation, but displaceable in the plane of the circular disc (9) with a rotating ring (11), and that the control disc (10) is displaceable together with the circular disc (9) with a key disc (12), engaging on the control disc, and which for the positioning of the control disc is rotatable together with the rotating ring, and for displacement of the circular disc with the rotating ring stationary, is rotatable separately about the cylinder axis.

4. Device according to Claim 3, characterized in that the rotating ring (11) and key disc (12) have an external toothing (13) and are able to be rotationally driven individually via a toothed-wheel gearing.

5. Device according to one of Claims 2 to 4, characterized in that the cylinder jacket (6) and cylinder base (5, 9) are produced from a ceramic material.

6. Device according to one of Claims 1 to 5, characterized in that in the interior of the chamber at least one sensor (39) is arranged for the qualitative evaluation of the content of the chamber.

7. Device according to Claim 6, characterized in that the sensor is arranged on the cylinder base.

8. Method for the qualitative and/or quantitative evaluation of liquids with a device according to Claim 1, characterized in that initially a first supply line is opened and the chamber volume is increased by a predeterminable volume proportion, starting from a zero volume with a corresponding supply of liquid, that then the first supply line is closed and a second and if required further supply lines are opened in sequence with a simultaneous alteration in volume and then closed again, and that on conclusion of the evaluation the chamber content is exhausted to zero through reduction of the chamber volume.

9. Method according to Claim 8, characterized in that for the evaluation of the liquid in the chamber at least one sensor, arranged in the chamber, is activated.

10. Method according to Claim 8 or 9, characterized in that the mixing of the liquids in the chamber is accelerated by a rotation- and vibration body.

## Revendications

1. Dispositif pour le dosage qualitatif et/ou quantitatif de liquides, dans lequel le volume d'une chambre fermée (1) peut être modifié pour le dosage d'une quantité de liquide, et dans lequel au moins deux canaux (2) débouchant dans la chambre pour amener ou évacuer les liquides, dans lequel la chambre (1) est délimitée d'une part par un cylindre (3) dans lequel est disposé un piston (4) déplaçable et, d'autre part, par un fond de cylindre (5), caractérisé en ce que les canaux (2) sont conduits à travers le fond (5) du cylindre sans organe obturateur et se terminent sur la face intérieure de celui-ci par des orifices (8), en ce que la paroi frontale du cylindre (3) s'applique, à siège étanche, sur le fond (5) du cylindre, afin d'obturer les orifices (8), en ce que le cylindre (3) et le fond de cylindre (5) sont réalisés déplaçables l'un par rapport à l'autre, de telle manière que les orifices (8) puissent être découverts au moyen de ce déplacement relatif, pour que la chambre (1) communique avec le canal ou avec les canaux qui sont affectés aux orifices respectifs, et en ce que le piston (4) est appliqué en position d'expulsion sur le fond (5) du cylindre pour obtenir un volume zéro dans la chambre (1).

2. Dispositif selon la revendication 1, caractérisé en ce que plusieurs orifices (8a - 8h) de canaux distincts sont disposés en cercle dans le fond (5) du cylindre, de telle sorte que tous les orifices puissent être obturés par la face frontale (7) de l'enveloppe (6) du cylindre et qu'à chaque déplacement du fond (5) du cylindre par rapport à l'axe du cylindre, un orifice au moins puisse être découvert.

3. Dispositif selon la revendication 2, caractérisé en ce que le fond du cylindre est un disque circulaire (9), situé en plan parallèle dans un disque de manoeuvre (10), de telle manière que le disque de manoeuvre (10) soit apte à pivoter autour du disque circulaire (9), en ce que le disque de manoeuvre (10), tout en étant mobile dans le plan du disque circulaire (9), est solidaire en rotation d'une couronne de pivotement (11), et en ce que le disque de manoeuvre (10) est déplaçable, conjointement avec le disque circulaire (9), à l'aide d'un disque de calage (12) en prise avec le disque de manoeuvre, lequel disque de calage peut tourner séparément autour de l'axe du cylindre, pour positionner le disque de manoeuvre conjointement avec la couronne de pivotement et pour déplacer le disque circulaire alors que la couronne de pivotement est immobilisée.

4. Dispositif selon la revendication 3, caractérisé en ce que la couronne de pivotement (11) et le disque de calage (12) présentent une denture externe (13) et sont aptes à être entraînés individuellement en rotation au moyen d'une transmission à roue dentée.

5. Dispositif selon l'une des revendications 2 à 4, caractérisé en ce que l'enveloppe (6) et le fond (5, 9) du cylindre sont fabriqués en une matière céramique.

6. Dispositif selon l'une des revendications 1 à 5, caractérisé en ce qu'il est disposé à l'intérieur de la chambre au moins un capteur (39) pour le dosage qualitatif du contenu de la chambre.

7. Dispositif selon la revendication 6, caractérisé en ce que le capteur est disposé dans le fond du cylindre.

8. Procédé pour le dosage qualaitatif et/ou quantitatif de liquides, avec un dispositif selon la revendication 1, caractérisé en ce qu'il consiste à ouvrir d'abord un premier conduit d'admission et à augmenter le volume de la chambre, en partant du volume zéro, d'une fraction de volume préalablement déterminable par une admission de liquide correspondante, à fermer ensuite le premier conduit d'admission et à ouvrir puis à refermer séquentiellement un second et, le cas échéant, d'autres conduits d'admission avec des modifications de volume simultanées et, une fois le dosage terminé, à expulser le contenu de la chambre en réduisant le volume de la chambre jusqu'à zéro.

9. Procédé selon la revendication 8, caractérisé en ce que, pour le dosage du liquide contenu dans la chambre, au moins un capteur disposé dans la chambre est activé.

10. Procédé selon la revendication 8 ou 9, caractérisé en ce que le mélange intime des liquides dans la chambre est accéléré par un organe rotatif ou vibrant.

Fig. 1

a

4
3
1
6
7
2a  5  8  2b

b

4
2a  2b

c

4
2a  2b

Fig.2

a

14
3
6
2a  2b
16  15

b

14
1
2a  2b
16  15

9

Fig. 3

a

b

Fig. 4

Fig.5

Fig.6

Fig.7

*Fig. 8*

10

8a

22

8c

12

*Fig.9*

Fig. 10

Fig. II